Europäisches Patentamt

European Patent Office

Office européen des brevets

(11) Publication number: **0 242 488 B1**

# EUROPEAN PATENT SPECIFICATION

(45) Date of publication of the patent specification: 22.11.90

(51) Int. Cl.⁵: **B01D 53/36**, B01D 53/34, B01J 35/04

(21) Application number: 86730067.5

(22) Date of filing: 22.04.86

(54) **Filter medium for treating an exhaust gas.**

(43) Date of publication of application:
28.10.87 Bulletin 87/44

(45) Publication of the grant of the patent:
22.11.90 Bulletin 90/47

(84) Designated Contracting States:
AT BE CH DE FR GB IT LI LU SE

(56) References cited:
EP-A- 0 018 713
EP-A- 0 146 407
FR-A- 2 290 242

(73) Proprietor: MITSUBISHI JUKOGYO KABUSHIKI KAISHA,
5-1, Marunouchi 2-chome Chiyoda-ku, Tokyo 100(JP)

(72) Inventor: Horaguchi,Mitsuhiro Yokohama Dockyard
Mach. Works, Mitsubishi Jukogyo K.K. 12, Nishiki-cho,
Naka-ku, Yokohama City Kanagawa Pref.(JP)
Inventor: Kaihara, Yuji Yokohama Dockyard Mach.
Works, Mitsubishi Jukogyo K.K. 12, Nishiki-cho,
Naka-ku, Yokohama City Kanagawa Pref.(JP)
Inventor: Tomisawa, Shigechika Yokohama Dockyard
Mach. Works, Mitsubishi Jukogyo K.K. 12, Nishiki-cho,
Naka-ku, Yokohama City Kanagawa Pref.(JP)
Inventor: Iida, Yukio c/o Yokohama Dockyard & Mach.
Works, Mitsubishi Jukogyo K.K. 12, Nishiki-cho,
Naka-ku, Yokohama City Kanagawa Pref.(JP)

(74) Representative: Meissner, Peter E., Dipl.-Ing. et al,
Patentanwaltsbüro Meissner & Meissner,
Herbertstrasse 22, D-1000 Berlin 33(DE)

## Description

This invention relates to the treatment of exhaust gases and more particularly, to a filter medium for effectively treating gases which are discharged in large amounts from municipal refuse incineration plants and which contain fly ashes from incinerators, hydrogen chloride, nitrogen oxide, sulfur oxides and the like.

The present inventors already developed and proposed a technique for forming a solid layer of slaked lime and clacium chloride on a woven filter fabric in order to efficiently eliminate hydrogen chloride from exhaust gases. The filter fabric used in this technique is made of a glass wool material which has a relatively poor heat resistance. Accordingly, it is necessary that a gas passed through the fabric be kept at a temperature lower than 250°C.

Known heat-resistant filter materials include woven filter fabrics of carbon fibers and stainless steel wires. However, these fabrics have the disadvantage in that the carbon fiber-woven filter fabric is not resistant to abrasion and the stainless steel woven filter fabric is very expensive.

Although the present invention contemplates to eliminate not only hydrogen chloride, but also nitrogen oxides (i.e. denitration), it is difficult to deposit a catalyst for denitration on the stainless steel woven filter fabric in order to impart the denitration function. More particularly, for the coating of the denitration catalyst on the fabric surface, it is necessary that the coating material (denitration catalyst) and the fabric surface be wetted sufficiently, but the stainless steel filter fabric has poor wettability, so that it is difficult to form a uniform coating layer on the fabric.

It is accordingly an object of the invention to provide an exhaust gas treating filter medium or material which overcomes the above prior art problems by improving the heat resistance of a filter material at low costs and which has the function of eliminating both hydrogen chloride and nitrogen oxides.

In order to solve the problems involved in the prior art, the present inventors made intensive studies. As a result, it was found when porous ceramics were used as a filter material, the heat resistance was improved with good affinity for catalysts. In addition, the ceramics had the capability of dust collection and could be cleansed by application of backflow washing air. Thus, a favorable exhaust gas-treating medium could be obtained using the ceramic filter. The present invention is accomplished based on the above finding.

According to one embodiment of the present invention, there is provided a filter medium for treating an exhaust gas which is characterized by a filter medium for treating an exhaust gas which is placed in passage of an exhaust to permit the exhaust gas to pass through the filter medium, which medium comprises a porous ceramic substrate, a pre-coat layer 2, 23 of a reaction aid for preventing clogging of the filter medium and a layer 3, 24 of a mixture of slaked lime or calcium carbonate and calcium chloride formed in this order on one side of said ceramic substrate from which the exhaust gas enters and a layer 4, 25 of a catalyst for eliminating nitrogen oxides which is formed on the other side of said ceramic substrate from which the exhaust gas is discharged.

Further developments of the invention are disclosed in the subclaims 2 to 6 and will be explained below.

Fig. 1 is a schematic sectional view of an exhaust gas-treating medium according to one embodiment of the invention;

Fig. 2 is a schematic enlarged view of a part of the medium of Fig. 1;

Fig. 3 is block diagram illustrating fabrication of the medium of Fig. 1;

Fig. 4 is a schematic sectional view of a filter medium according to another embodiment of the invention;

Fig. 5 is a schematic enlarged view of a part of the medium of Fig. 4; and

Fig. 6 is a block diagram illustrating fabrication of the medium.

## DETAILED DESCRIPTION OF PREFERRED EMBODIMENTS

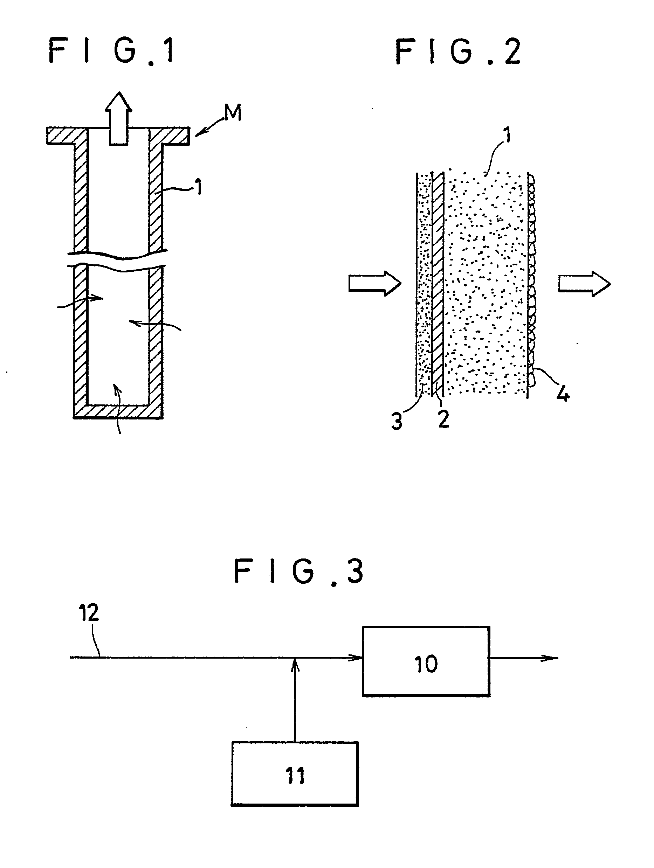

The first embodiment of the invention is described with reference to the accompanying drawings and particularly, to Figs. 1 through 3.

As is particularly shown in Figs. 1 and 2, a filter medium M of the present invention has a cylindrical construction of a porous ceramic such as, for example, mullite or highly pure alumina. The medium M has a substrate 1 and a layer 4 of a denitration catalyst, such as, for example, a mixture of vanadium pentaoxide and titanium oxide, on one side or an outlet side from which a gas is flown out or discharged. The layer 4 is formed, for example, after a firing operation on the surface of the substrate 1. On the other or inlet side of the substrate 1 from which the gas is passed in, there is formed a pre-coat layer 2 of a specific type of reaction aid in order to prevent clogging of the filter medium. A layer 3 of a mixture of slaked lime or calcium carbonate (hereinafter referred to generically as slaked lime) and clacium chloride is formed on the pre-coat layer 2. In the figures, the arrows indicate the directions of flow of a gas.

The specific type of reaction aid used as the pre-coat layer 2 of the present invention should preferably have (1) a small bulk density, (2) good air permeability, (3) non-adherence on absorption of moisture in air, and (4) a particle size of from 1 to 100 μm, preferably from 10 to 50 μm. Examples of the aid include powders of zeolite, alumina, diatomaceous earth, pearlite, activated clay, kaolin, feldspar, quartz and the like. These powders may be used single or in combination of two or more. Of these materials, zeolite, diatomaceous earth and pearlite are preferred.

The filter medium M of the invention shown in Figs. 1 and 2 has a cylindrical form and is constituted, for example, by the following manner.

First, the substrate 1 on which the denitration catalyst layer 4 has been formed is placed in a duct 10 for an exhaust gas as shown in Fig. 3. Subsequently, a specific type of reaction aid as indicated above is charged from a feeder 11 of Fig. 3 to form the pre-coat layer 2 on one surface of the substrate 1 opposite to the side on which the catalyst layer 4 is formed.

When slaked lime is blown into the exhaust gas, it reacts with hydrogen chloride in the exhaust gas and is converted into calcium chloride. Accordingly, when the exhaust gas into which slaked lime is incorporated is introduced from line 12, calcium chloride and unreacted slaked lime reach the surface of the substrate 1 in the duct 10, thereby forming the solid material layer 3 on the pre-coat layer 2.

.It will be noted that calcium chloride is deliquescent in nature and may convert into a sticky solid substance by condensation of moisture in the exhaust gas. If the sticky solid substance is formed, the medium may be clogged or the powder layer may be excessively compacted, making it difficult to keep the filter medium in a normal condition.

To avoid this, the pre-coat layer of a specific type of reaction aid is formed on the medium surface in the practice of the invention.

When the exhaust gas entraining slaked lime as described before is passed after the formation of the pre-coat layer 2, the solid substances in the gas form the layer (powder layer) 3 on the pre-coat layer 2. At the same time, as shown in Fig. 3, the reaction aid is invariably injected from the feeder 11 into the exhaust gas duct 10 so that the compactness of the powder layer 3 can be suppressed.

In this connection, however, these layers 2 and 3 grow with time, resulting in an increasing pressure loss of the medium. The powder layer 3 has to be scraped off at certain intervals of time and a fresh powder layer should be formed in the same manner as described above.

When an exhaust gas is passed through the medium of the present invention, unreacted hydrogen chloride in the exhaust gas reacts with slaked lime of the powder layer 3, thereby eliminating the hydrogen chloride in a high efficiency.

At the same time, dust in the exhaust gas is also eliminated by the filter medium and thus, dust collection can also be expected.

Moreover, if an alkaline substance is used as the reaction aid, sulfur oxide can be removed from the exhaust gas.

Since the medium of the invention has the denitration catalyst layer 4, passage of an exhaust gas in which ammonia gas is incorporated permits nitrogen oxides to be eliminated on contact with or passage through the layer 4.

Another embodiment of the invention is described.

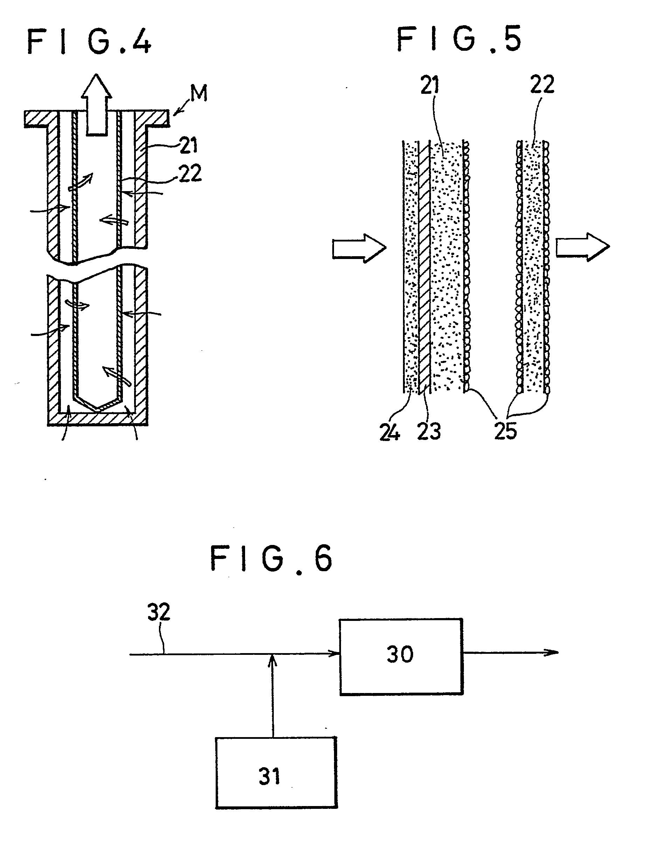

As particularly described in Figs. 4 and 5, a filter medium M according to another embodiment of the invention has a double-cylinder construction of a porous ceramic such as, for example, mullite, highly pure alumina or the like. The construction is composed of an outer cylinder 21 and an inner cylinder 22, which are hollow and are closed at one end as shown. The inner cylinder 22 has at least one layer 25 of a denitration catalyst such as, for example, a mixture of vanadium pentaoxide and titanium oxide. The layer 25 is formed, for example, after a firing operation on the surface of the filter medium. In the figures, the denitration catalyst layers 25 are formed on both sides of the inner cylinder 22, i.e. gas inlet and outlet sides, and also on an outlet side of the outer cylinder 21. A pre-coat layer 23 of a specific type of reaction aid is provided on an inlet side of the outer cylinder 21 from which an exhaust gas is passed. On the pre-coat layer 25 is formed a layer 24 of a solid material comprising a mixture of slaked lime or calcium carbonate and calcium chloride. In these figures, the arrows indicate the directions of flow of the exhaust gas.

The filter medium M of the invention is formed as follows.

The inner and outer cylinders 22, 21 which have, respectively, the denitration layers 25 as desired are placed in a duct 30 for an exhaust gas as shown in Fig. 6. Subsequently, a specific type of reaction aid as defined with regard to the first embodiment of the invention is introduced from a feeder 31 into the duct 30, thereby forming the pre-coat layer 23 on the outer side of the outer cylinder 21.

On the other hand, when slaked lime in the form of powder is blown into the exhaust gas, it reacts with hydrogen chloride in the exhaust gas to form calcium chloride. When the exhaust gas into which slaked lime has been charged is introduced from line 32, calcium chloride and unreacted slaked lime reach the surface of the outer cylinder 21 on which the solid material layer 24 is formed.

The subsequent treatment of the pre-coat layer 23 and the solid material layer or powder layer 24 is made in the same manner as in the first embodiment described before.

This type of filter medium has similar effects as the filter medium of the first embodiment. In addition, when the denitration catalyst layers 25 are formed on the gas-outlet side of the outer cylinder 21 and on opposite sides of the inner cylinder 22, nitrogen oxides can be more effectively removed on contact, with the layers 25, of the exhaust gas in which ammonia gas has been incorporated.

**Claims**

1. A filter medium for treating an exhaust gas which is placed in passage of an exhaust to permit the exhaust gas to pass through the filter medium, which medium comprises a porous ceramic substrate, a pre-coat layer (2, 23) of a reaction aid for preventing clogging of the filter medium and a layer (3, 24) of a mixture of slaked lime or calcium carbonate and calcium chloride formed in this order on one side of said ceramic substrate from which the exhaust gas enters, and a layer (4, 25) of a catalyst for eliminating nitrogen oxides which is formed on the other side of said ceramic substrate from which the exhaust gas is discharged.

2. A filter medium according to claim 1, wherein said ceramic substrate is in the form of a hollow cylinder closed at one end thereof and the catalyst layer (4) is formed of the inner surface of said hollow cylinder.

3. A filter medium according to claim 1, wherein said filter medium made of porous ceramic material is formed into a double-cylinder consisting of an inner hollow cylinder (22) and an outer hollow cylinder (21), one end of said double-cylinder being closed and the opposite end of the inner cylinder only being open, a layer (23) of said reaction aid and a layer (24) of said mixture are formed on the outer surface of said outer cylinder (21) and a catalyst layer (25) is formed at least on the either surface of said inner cylinder (22).

4. A filter medium according to claim 3, wherein said catalyst layer (25) is formed on the inner and outer surface of said inner cylinder (22).

5. A filter medium according to claim 3, wherein said catalyst layer (25) is further formed on the inner surface of said outer cylinder (21) from which the exhaust gas is discharged.

6. A filter medium according to claim 1, wherein said reaction aid is in the form of a powder of a member selected from the group consisting of zeolite, alumina, diatomaceous earth, pearlite, activated clay, kaolin, feldspar, quartz and mixtures thereof.

## Patentansprüche

1. Filtermedium zur Behandlung von Abgas, das in einem Durchgang an einem Auslaß so angeordnet ist, daß das Abgas durch das Filtermedium hindurchgeht, wobei das Medium ein poröses keramisches Substrat aufweist, eine Vorbeschichtung (2, 23) aus einem Reaktionshilfsmittel zur Verhinderung des Verstopfens des Filtermediums und eine Schicht (3, 24) aus einer Mischung aus gelöschtem Kalk oder Calciumcarbonat und Calciumchlorid ausgebildet auf einer Seite des keramischen Substrates auf der das Abgas eintritt und eine Schicht (4, 25) eines Katalysators zum Eliminieren der Stickstoffoxyde an der anderen Seite des keramischen Substrates an der das Abgas austritt.

2. Filtermedium nach Anspruch 1, wobei das keramische Substrat in Form eines einseitig geschlossenen Hohlzylinders vorliegt und die katalysische Schicht (4) auf der Innenfläche dieses Hohlzylinders ausgebildet ist.

3. Filtermedium nach Anspruch 1, wobei dieses aus einem porösen keramischen Material in Form eines Doppelzylinders besteht mit einem inneren Hohlzylinder (22) und einem äußeren Hohlzylinder (21), ein Ende des Doppelzylinders geschlossen und nur das gegenüberliegende Ende des inneren Zylinders offen ist, eine Schicht (23) des Reaktionshilfsmittels und eine Schicht (24) der Mischung auf der äußeren Oberfläche des äußeren Zylinders (21) und eine Katalysatorschicht (25) auf wenigstens der einen Oberfläche des inneren Zylinders (22) ausgebildet ist.

4. Filtermedium nach Anspruch 3, wobei die Katalysatorschicht (25) auf der inneren und der äußeren Oberfläche des inneren Zylinders (22) ausgebildet ist.

5. Filtermedium nach Anspruch 3, wobei die Katalysatorschicht (25) auch auf der inneren Oberfläche des äußeren Zylinders (21) ausgebildet ist, von der das Abgas abgegeben wird.

6. Filtermedium nach Anspruch 1, wobei das Reaktionshilfsmittel in Pulverform vorliegt und ausgewählt ist aus der Gruppe Zeolit, Tonerde, Diatomenerde, Pearlit, aktivierter Ton, Kaolin, Feldspat, Quarz und Mischungen davon.

## Revendications

1. Filtre pour traiter un gaz d'échappement, qui est placé dans un passage d'échappement pour permettre au gaz d'échappement de traverser le filtre, le filtre comprenant un substrat céramique poreux, une couche de pré-enrobage (2, 23) d'un produit réactif pour éviter le bouchage du filtre et une couche (3, 24) d'un mélange de chaux éteinte ou de carbonate de calcium et de chlorure de calcium, formées dans cet ordre sur un côté dudit substrat céramique, à partir duquel entre le gaz d'échappement, et une couche (4, 25) d'un catalyseur pour éliminer les oxydes d'azote, qui est formée sur l'autre côté dudit substrat céramique, à partir duquel le gaz d'échappement est évacué.

2. Filtre selon la revendication 1, dans lequel ledit substrat céramique se présente sous la forme d'un cylindre creux fermé à une de ses extrémités, et la couche de catalyseur (4) est formée sur la surface interne dudit cylindre creux.

3. Filtre selon la revendication 1, dans lequel ledit filtre constitué de matière céramique poreuse forme un cylindre double constitué d'un cylindre interne creux (22) et d'un cylindre externe creux (21), une extrémité dudit cylindre double étant fermée et l'extrémité opposée du cylindre interne seulement étant ouverte, une couche (23) dudit produit réactif et une couche (24) dudit mélange étant formées sur la surface externe dudit cylindre externe (21) et une couche de catalyseur (25) étant formée au moins sur l'une ou l' autre surface dudit cylindre interne (22).

4. Filtre selon la revendication 3, dans lequel ladite couche de catalyseur (25) est formée sur les surfaces interne et externe dudit cylindre interne (22).

5. Filtre selon la revendication 3, dans lequel ladite couche de catalyseur (25) est formée de plus sur la surface interne dudit cylindre externe (21), à partir de laquelle le gaz d'échappement est évacué.

6. Filtre selon la revendication 1, dans lequel ledit produit réactif est sous forme d'une poudre d'un corps choisi dans le groupe constitué de la zéolite, l'alumine, la terre diatomée, la perlite, l'argile activée, le kaolin, le feldspath, le quartz, et leurs mélanges.

# F I G . 1

M

1

# F I G . 2

1

3 2 4

# F I G . 3

12

10

11

FIG.4

FIG.5

FIG.6